# EUROPEAN PATENT SPECIFICATION

(11) **EP 3 781 379 B1**
(45) Date of publication and mention of the grant of the patent: **24.08.2022**
(21) Application number: 19721140.2
(22) Date of filing: 08.04.2019
(51) Int. Cl.: B29C 45/14, B29C 45/00

(54) **METHOD FOR MAKING A PLASTIC OBJECT AND SYSTEM FOR MANUFACTURING SAID OBJECT**
VERFAHREN ZUR HERSTELLUNG EINES KUNSTSTOFFGEGENSTANDES UND SYSTEM ZUR HERSTELLUNG DIESES GEGENSTANDES
PROCÉDÉ DE FABRICATION D'UN OBJET EN PLASTIQUE ET SYSTÈME DE FABRICATION DUDIT OBJET

(30) Priority: 16.04.2018 IT 201800004533
(43) Date of publication of application: 24.02.2021
(73) Proprietor: Ares Line S.p.A., 36010 Carré (VI) (IT)
(72) Inventor: CONSOLARO, Lorenzo, 36071 Arzignano (VI) (IT)
(74) Representative: Ziliotto, Tiziano
(86) International application number: PCT/IB2019/052878
(87) International publication number: WO 2019/202434

(56) References cited:
- DE-A1-102005 032 664
- DE-C1- 19 637 638

## Description

### TECHNICAL FIELD OF THE INVENTION

The present invention concerns the field of production of plastic objects.

More specifically, the present invention concerns a method for making plastic objects through a moulding process.

The invention concerns also the system for making said object.

### DESCRIPTION OF THE STATE OF THE ART

It is known that various types of technology, for example injection moulding, are used for manufacturing plastic objects, for example components for chairs, such as seats, backs, monocoques.

In some cases, the objects to be made need to be provided with differentiated surface areas. For example, these areas may be made of a different material and/or in a different colour compared to the rest of the structural body, in order to provide a desired ornamental and/or decorative aspect or to give a specific function to that area: for example, a knurled part may be provided to enhance the gripping properties or a special material may be used to locally increase mechanical resistance.

According to the known art, the object provided with said areas is obtained by using a first material, preferably a thermoplastic material, which constitutes the bearing structure of the object itself, while an insert in a different colour and/or material is required for the areas of a different type.

According to the known technology, said insert is placed inside a mould, typically defined by two half moulds, the mould is closed and then the thermoplastic material is injected into the cavity defined by the mould.

In special cases, the object needs to be provided with several inserts positioned on opposite external surfaces of the bearing structure, the latter being typically in a laminar form.

The injection moulding technology used for making said objects according to the known technique, however, poses some drawbacks.

A first drawback of said technology is represented by the fact that it is difficult to maintain the inserts in the correct position during the injection of the thermoplastic material.

Therefore, the aesthetic and/or functional result desired for the final product may not be obtained, which is detrimental for the manufacturer.

Another drawback of said technology is represented by the fact that mass production of said objects, with the same aesthetic and/or functional properties for all the objects produced, is very difficult.

Therefore, it is the object of the present invention to at least partially overcome the drawbacks of the known art.

More specifically, it is one object of the present invention to provide a method for making plastic objects having several surface portions of a different type and/or in a different colour with respect to the rest of the body.

It is another object to provide a method for making plastic objects having several surface portions of a different type and/or in a different colour with respect to the rest of the body, which allows mass production and at the same time makes it possible to maintain the same characteristics for the different objects manufactured. The document DE 10 2005 032 664 A1 describes placing two sheets in a mould cavity, where they are held in position by electrostatic charge, and injecting thermoplastic material into the cavity.

### SUMMARY OF THE PRESENT INVENTION

The present invention is based on the general consideration that it is possible to manufacture an object made of a polymeric material and provided with a main body comprising a first visible surface and a second visible surface opposite said first surface by means of a method comprising the following steps: positioning a first insert in a polymeric material in contact with a first half mould and maintaining the first insert in contact with the first half mould by charging it electrostatically, and positioning a second insert in a polymeric material in contact with a second half mould and maintaining said second insert in contact with said second half mould by charging it electrostatically; closing said half moulds and injecting a polymeric material between the two half moulds. According to a first aspect of the present invention, therefore, the same concerns a method for making an object in a polymeric material provided with a main body comprising a first visible surface and a second visible surface opposite said first visible surface, wherein the method comprises the following steps:
- preparing a first half mould configured according to the shape of said first visible surface of said object and a second half mould facing said first half mould and configured according to the shape of said second visible surface of said object;
- positioning a first insert in a polymeric material in contact with said first half mould and maintaining said first insert in contact with said first half mould by charging said first insert electrostatically;
- positioning a second insert in a polymeric material in contact with said second half mould and maintaining said second insert in contact with said second half mould by charging said second insert electrostatically;
- closing said half moulds in order to define a cavity;
- injecting a polymeric material at a predetermined temperature into said cavity, said polymeric material being suited to fill said cavity in such a way as to define said main body of said object and suited to come into contact with said first insert and said second insert;
- letting said polymeric material cool down;
- opening said half moulds and extracting said object.

In a preferred embodiment, the step of positioning the second insert is performed after the step of positioning the first insert.

Preferably, said step of injecting a polymeric material is carried out by injecting the polymeric material into the closed mould from an intermediate injection point located between the first insert and the second insert.

According to the invention during the step of injection of the polymeric material, the polymeric material that makes up the main body pushes the first insert against the first half mould and/or the polymeric material pushes the second insert against the second half mould.

According to a preferred embodiment of the invention, the method comprises a step of removal of heat from the first half mould at the level of the area where the first insert is positioned and/or a step of removal of heat from the second half mould at the level of the area where the second insert is positioned.

Preferably, the step of positioning the first insert and the second insert is performed by automatic mechanical means and/or the step of extracting the object is performed by automatic mechanical means.

In a preferred embodiment of the invention, the temperature of injection of the thermoplastic material into the cavity is lower than the melting point of the polymeric material of the first insert and/or of the second insert.

Preferably, the step of injecting a polymeric material into the cavity comprises the injection of a thermoplastic material.

According to a second aspect of the present invention, the same concerns a system for manufacturing an object made of a polymeric material and provided with a main body comprising a first visible surface and a second visible surface opposite said first visible surface, wherein said system comprises:
- a first half mould configured according to the shape of said first visible surface of said object and a second half mould facing said first half mould and configured according to the shape of said second visible surface of said object;
- positioning means suited to position a first insert made of a polymeric material in contact with said first half mould;
- means suited to charge said first insert electrostatically;
- positioning means suited to position a second insert made of a polymeric material in contact with said second half mould;
- means suited to charge said second insert electrostatically;
- injection means suited to inject a polymeric material.

According to a preferred embodiment of the invention, the system comprises cooling means associated with the first half mould and/or with the second half mould.

Preferably, the cooling means are associated with the first half mould at the level of the area where the first insert is positioned and/or the cooling means are associated with the second half mould at the level of the area where the second insert is positioned.

According to a further aspect of the present invention, the same concerns an object made of a polymeric material and provided with a main body comprising a first visible surface and a second visible surface opposite said first visible surface, said object being obtained with the method and/or the system described above.

### BRIEF DESCRIPTION OF THE DRAWINGS

Further advantages, objects and characteristics, as well as further embodiments of the present invention are defined in the claims and are highlighted in the following description, with reference to the attached drawings; in the drawings, corresponding or equivalent characteristics and/or component parts of the present invention are identified by the same reference numbers. More specifically, in the drawings:
- Figure 1 shows an axonometric view of an object made of a polymeric material and obtained with a method and a system according to a preferred embodiment of the present invention;
- Figure 2 shows an exploded view of the object shown in Figure 1;

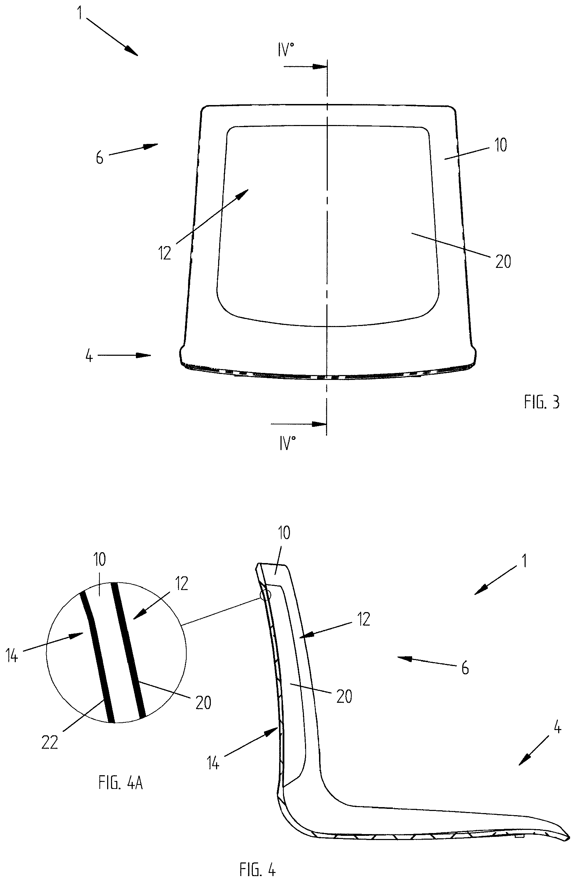

- Figure 3 shows a side plan view of the object shown in Figure 1;
- Figure 4 shows a sectional view of Figure 3 along line IV-IV;
- Figure 4A shows an enlarged detail of Figure 4;
- Figures from 5 to 11 show a system for making an object in a polymeric material according to a preferred embodiment of the present invention, in which the method according to the invention is implemented.

### DETAILED DESCRIPTION OF THE PRESENT INVENTION

The present invention will be further illustrated in the following detailed description of a preferred embodiment, which is represented in the drawings. It should, however, be noticed that the present invention is not limited to the specific embodiment described below and represented in the drawings; rather, it should be noticed that the embodiment described below and represented in the drawings clarifies some aspects of the present invention, the scope of which is defined in the claims. The present invention must therefore be considered as including all the variants and/or modifications that are clear for the expert in the art.

It should also be considered that the present invention can be advantageously applied in the field of production of monocoque chairs provided with opposite inserts in the back area and for this reason here below we make reference to an object of this type.

It should however be underlined that the present invention is not limited to the manufacture of an object of this type. On the contrary, the present invention can be conveniently applied in all the cases in which it is necessary to produce an object in a polymeric material with several inserts positioned on opposite external surfaces of a bearing structure, such as windscreens, partitions, small partitions for writing desks.

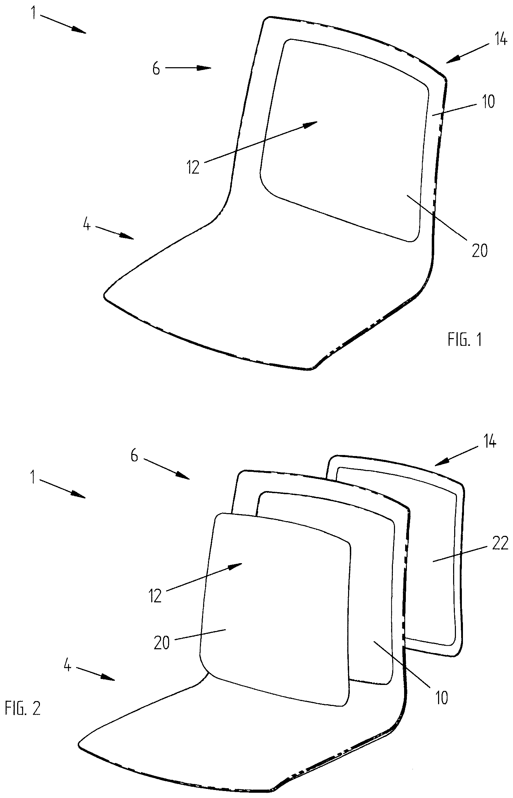

In Figure 1, the reference numeral 1 identifies an object made of a polymeric material, obtained according to the present invention and preferably made up of a semi-finished product suitable for making a chair. Said semi-finished product comprises a monocoque element defined by a chair 4 and a back 6. Preferably, four supporting legs can be applied to said semi-finished product in order to obtain the final product, which is constituted by the chair.

The method and the system described in detail below and carried out according to the present invention make it possible to produce the object 1 as a monocoque element, more specifically they make it possible to produce the seat 4, the back 6 and its visible surfaces 12, 14.

The back 6, in fact, preferably comprises a main body 10, a first visible surface 12, meaning the surface on which the user can rest his/her back, and a second visible surface 14 opposite said first visible surface 12.

The visible surfaces 12, 14 of the back 6 have a predefined shape suited to give the desired ergonomic characteristics and/or aesthetical aspect to the chair.

The main body 10 preferably comprises a polymeric material.

In a preferred embodiment, the polymeric material of the main body 10 comprises a thermoplastic material, such as polypropylene.

In variant embodiments, the main body 10 can be made of a polymeric material including, for example, nylon, ABS, SAN, methacrylate, polyethylene, etc.

At the level of the visible surfaces 12, 14 the back 6 preferably comprises respective inserts 20, 22.

A first insert 20 is associated with the first visible surface 12 and a second insert 22 is associated with the second visible surface 14.

The inserts 20, 22 preferably comprise a polymeric material, for example polypropylene.

In variant embodiments, the inserts can be made of a polymeric material including, for example, nylon, ABS, SAN, methacrylate, polyethylene, polyester, etc.

In a preferred embodiment, the inserts 20, 22 comprise a material with high electrical resistivity, preferably with electrical resistivity values exceeding 106 Ω^{∗}cm. For example, if polypropylene is used, the electrical resistivity values will be in the order of 1016 Ω^{∗}cm, or if nylon is used, the electrical resistivity values will be in the order of 1015 Q^{∗}cm.

Advantageously, said electrical resistivity values allow the inserts 20, 22 to be charged electrostatically, as is better described below.

In a preferred embodiment, the polymeric material of the main body 10 and of the inserts 20, 22 is the same.

In a variant embodiment, said materials can be different and preferably selected in such a way that the melting point of the polymeric material that makes up the main body is lower than the melting point of the polymeric material that makes up the first and/or the second insert.

Preferably, the colour of the inserts 20, 22 is different from the colour of the polymeric material used for the main body 10, in order to give the desired aesthetic appearance to the object 1.

With reference to the Figures from 5 to 11, a system 50 for making said object 1 is described here below.

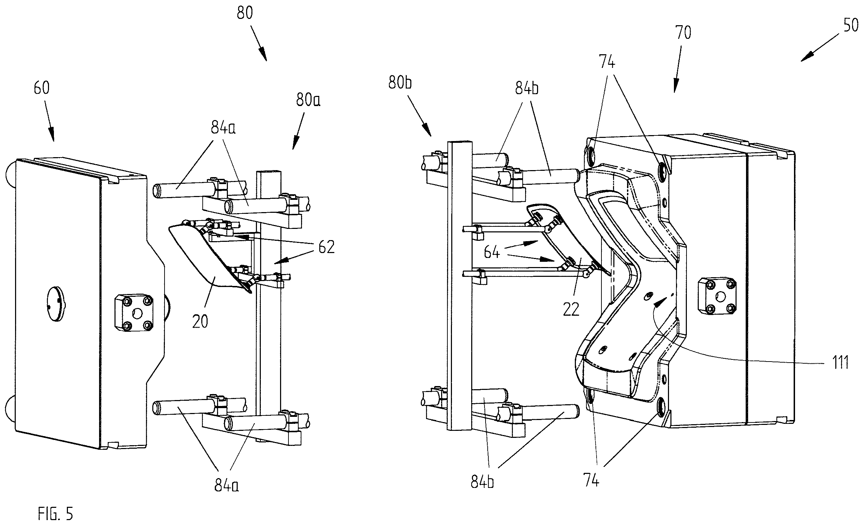

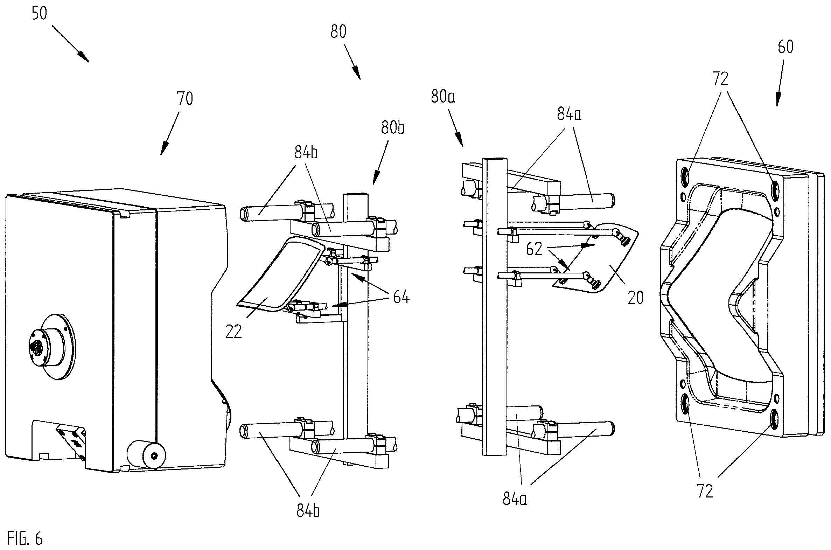

As shown particularly in Figures 5 and 6, the system 50 comprises, first of all, a first half mould 60 and a second half mould 70 facing the first half mould 60. The first half moulds 60, 70 are configured according to the shape of the object 1 to be made, and specially to the shape of said visible surfaces 10, 12.

The system 50 preferably comprises also first positioning means 80a designed to position the first insert 20 in contact with the first half mould 60 and second positioning means 80b suited to position the second insert 22 in contact with the second half mould 70.

Said positioning means 80a, 80b preferably belong to an automated/robotized system 80.

The system 50 preferably comprises also first means, not illustrated herein and of the type known per se, for charging the first insert 20 electrostatically and second means for charging the second insert 22 electrostatically.

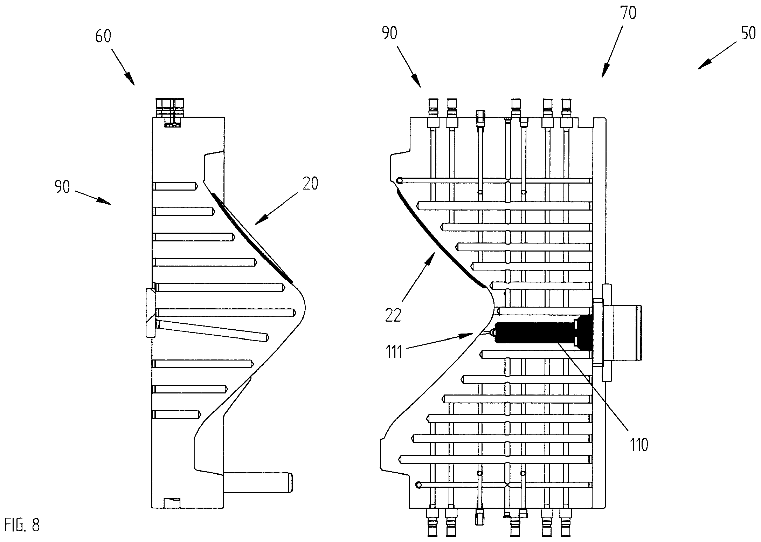

The system 50 preferably comprises also cooling means 90 associated with the first half mould 60 and with the second half mould 70, better visible in the sectional views shown in Figures 8, 9 and 10.

The cooling means 90 preferably comprise a plurality of channels suited to define a circuit for a cooling liquid, for example water or oil, suited to remove heat. More preferably, the cooling means 90 are located in the area where the first insert 20 is positioned and in the area where the second insert 22 is positioned. The production steps of the object 1 according to a preferred embodiment of the method of the invention are described here below.

The first insert 20 and the second insert 22 are preferably constituted by preformed elements, preferably in the material described above.

The method preferably comprises a first step during which the inserts 20, 22 are positioned between the first and the second half mould 60, 70, preferably through said positioning means 80a, 80b, as shown in Figures 5 and 6.

The inserts 20, 22 are collected, preferably through said positioning means 80a, 80b, from a suitable storage area or from a suitable processing station where they are produced.

In order for the positioning means 80a, 80b to be able to hold the inserts 20, 22 easily, said positioning means 80a, 80b preferably comprise respective handling means with suction cups 62, 64.

The positioning means 80a, 80b are furthermore associated with suitable centring means preferably comprising a plurality of rods 84a, 84b suited to be inserted with their ends in respective opposite seats 72, 74 defined in the first and in the second half mould 60, 70.

In a successive step of the invention, in fact, the two inserts 20, 22 are rested on the corresponding half mould 60, 70. The correct position of the inserts 20, 22 on the half moulds 60, 70 is guaranteed by said centring means and by the cooperation of said rods 84a, 84b with the respective opposite seats 72, 74.

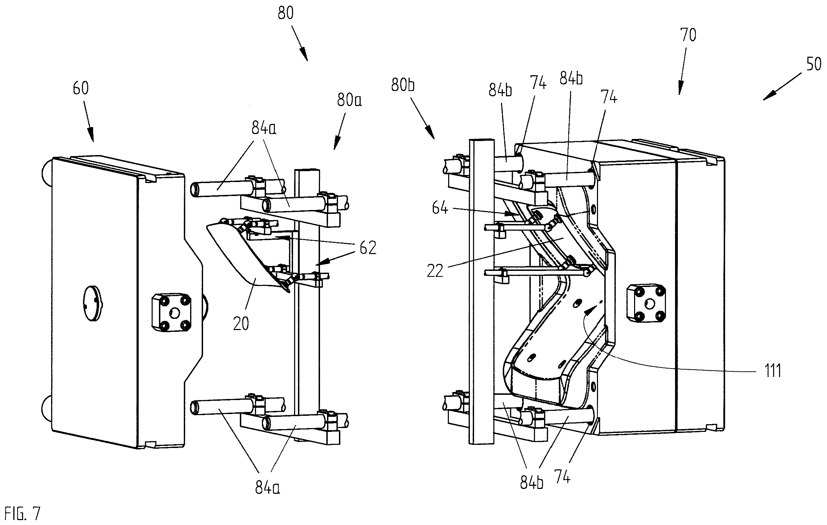

At the moment when the insert 20, 22 is arranged in the correct position on the respective half mould 60, 70, as shown for example in Figure 7 with reference to the second insert 22, the corresponding electrostatic charge means are activated, in such a way as to charge the insert 20, 22 electrostatically and allow it to be electrostatically attracted against the respective half mould 60, 70.

The handling device with suction cups 62, 64 can then release the hold of the respective insert 20, 22, whose adhesion to the half mould 60, 70 is guaranteed by the electrostatic attraction action.

Advantageously, the electrostatic attraction action guarantees the adhesion of the inserts 20, 22 to the half moulds 60, 70, avoiding the formation of bubbles and/or points where the inserts 20, 22 and the half moulds 60, 70 do not adhere to each other.

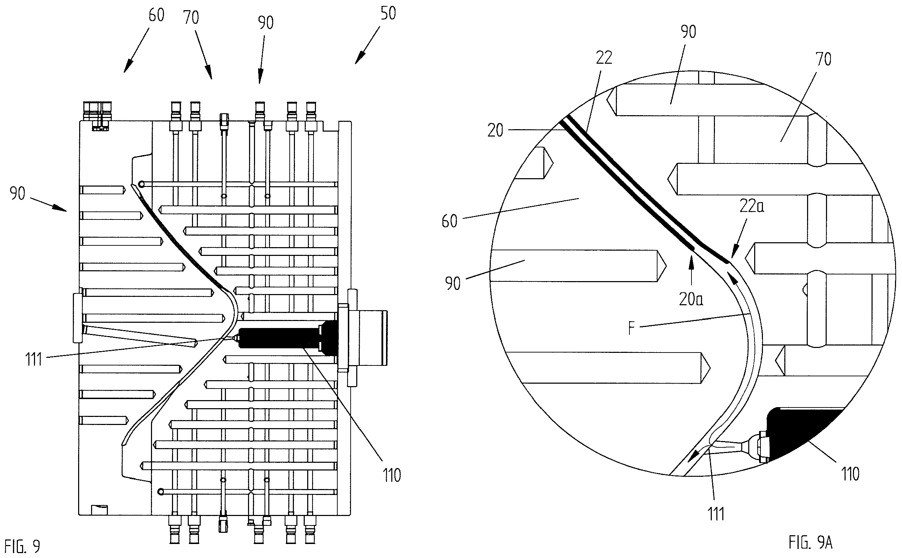

Once the inserts 20, 22 have been positioned on the half moulds 60, 70, the positioning means 84a, 84b are retracted (Figure 8) and the two half moulds 60, 70 are moved near each other in a mutually closed position (Figure 9).

In this configuration, the polymeric material, preferably thermoplastic, which will constitute the seat 4 and the back 6 of the object 1, and more specifically the main body 10 of the back 6, is injected.

The injection preferably takes place through injection means 110 suited to inject the heated polymeric/thermoplastic material into the cavity defined by the two half moulds 60, 70 through a feed hole 111.

The injected polymeric material flows into the cavity, as indicated for example by the flow F in Figure 9A, in such a way as to occupy the cavity completely. More specifically, the flow F of polymeric material that will constitute the main body 10 of the back 6 pushes the first insert 20 against the first half mould 60 and the second insert 22 against the second half mould 70.

Advantageously, the polymeric material that will constitute the main body 10 completely incorporates the two inserts 20, 22.

In order to favour the flow of the polymeric material inside the cavity and to avoid any movement of the inserts 20, 22, the head zones 20a, 22a of the inserts 20, 22 are bevelled, and they are not perpendicular to the advance direction of the material.

During said injection step, a heat removal operation (cooling) is preferably performed. Said cooling operation is advantageously carried out through said cooling means 90.

In variant embodiments, the main body and the inserts are made of different materials, selected in such a way that the melting point of the polymeric material that makes up the main body is lower than the melting point of the polymeric material that makes up the first and/or the second insert.

Advantageously, said solutions make it possible to maintain the inserts 20, 22 in a correct position during the injection of the polymeric material.

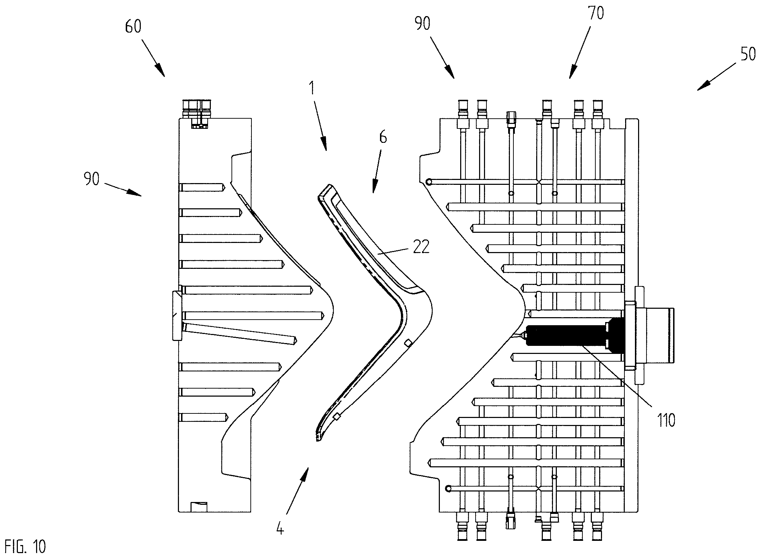

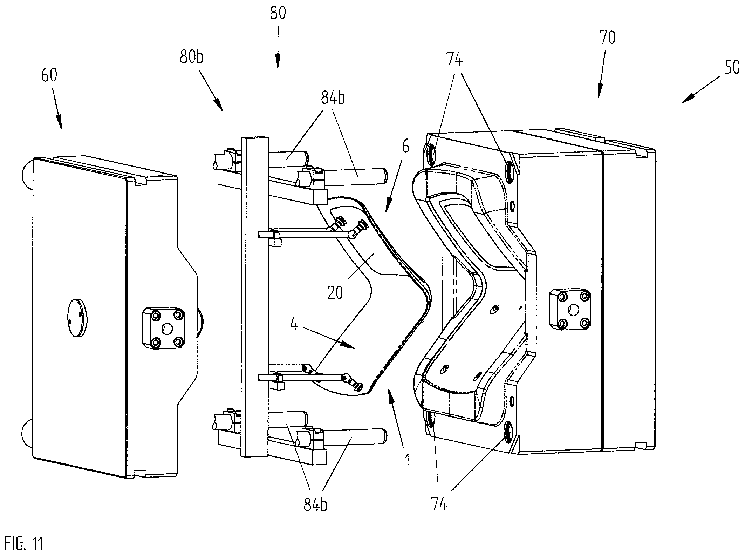

Again, said solutions make it possible to obtain a substantially smooth mould at the level of the areas where the inserts 20, 22 are rested, so that once the process has been completed the inserts 20, 22 are completely incorporated in the main body 10 and the corresponding visible surfaces 12, 14 are perfectly smooth. Successively, the whole is left to cool down, in order to allow the injected polymeric material to harden. The two half moulds 60, 70 can then be opened and the object 1 can be extracted, as shown in Figures 10 and 11, preferably through said positioning means 80a, 80b of said automated/robotized system 80. It has thus been shown, by means of the present description, that the method according to the present invention makes it possible to produce plastic objects with several surface portions of a different type and/or in a different colour with respect to the rest of the body.

## Claims

1. Method for making an object (1) with a polymeric material, said object (1) being provided with a main body (10), a first visible surface (12) and a second visible surface (14) opposite said first visible surface (12), the method comprising the following steps:
- preparing a first half mould (60) configured according to the shape of said first visible surface (12) of said object (1) and a second half mould (70) facing said first half mould (60) and configured according to the shape of said second visible surface (14) of said object (1);
- positioning a first insert (20) made of a polymeric material in contact with said first half mould (60) and maintaining said first insert (20) in contact with said first half mould (60) by charging said first insert (20) electrostatically;
- positioning a second insert (22) made of a polymeric material in contact with said second half mould (70) and maintaining said second insert (22) in contact with said second half mould (70) by charging said second insert (22) electrostatically;
- closing said half moulds (60, 70) so as to define a cavity;
- injecting a polymeric material at a predetermined temperature in said cavity, said polymeric material being suited to fill said cavity in such a way as to define said main body (10) of said object (1) and suited to be placed in contact with said first insert (20) and said second insert (22);
- letting said polymeric material cool down;
- opening said half moulds (60, 70) and extracting said object (1),
**characterized in that**
head zones (20a, 22a) of the first insert (20) and/or of the second insert (22) are bevelled and they are not perpendicular to the advance direction of the material,
**and in that,** during said step of injection of said polymeric material, the polymeric material that makes up said main body (10) pushes said first insert (20) against the first half mould (60) and/or the polymeric material pushes said second insert (22) against the second half mould (70).

2. Method according to claim 1, **characterized in that** said step of positioning the second insert (22) is performed after said step of positioning the first insert (20).

3. Method according to any of the preceding claims, **characterized in that** said step of injecting a polymeric material is performed by injecting said polymeric material in the closed mould from an intermediate injection point between said first insert (20) and said second insert (22).

4. Method according to any of the preceding claims, **characterized in that** it comprises a step during which heat is removed from said first half mould (60) at the level of the area where said first insert (20) is positioned and/or a step during which heat is removed from said second half mould (70) at the level of the area where said second insert (22) is positioned.

5. Method according to any of the preceding claims, **characterized in that** said step of positioning said first insert (20) and said second insert (22) is performed by means of automatic mechanical means (80, 80a, 80b) and/or said step of extracting said object (1) is performed by means of automatic mechanical means (80, 80a, 80b).

6. Method according to any of the preceding claims, **characterized in that** said step of injecting a polymeric material into said cavity comprises the injection of a thermoplastic material.

7. System (50) for making an object (1) with a polymeric material, said object (1) being provided with a main body (10), a first visible surface (12) and a second visible surface (14) opposite said first visible surface (12), **wherein** said system (50) comprises:
- a first half mould (60) configured according to the shape of said first visible surface (12) of said object (1) and a second half mould (70) facing said first half mould (60) and configured according to the shape of said second visible surface (14) of said object (1);
- a first insert (20) made of a polymeric material in contact with said first half mould (60);
- positioning means (80, 80a) suited to position said first insert (20);
- means suited to charge said first insert (20) electrostatically;
- a second insert (22) made of a polymeric material in contact with said second half mould (70);
- positioning means suited to position said second insert (22);
- means suited to charge said second insert (22) electrostatically;
- injection means (110) suited to inject a polymeric material;
head zones (20a, 22a) of the first insert (20) and/or of the second insert (22) are bevelled, they are not perpendicular to the advance direction of the material.

8. System (50) according to claim 7, **characterized in that** it comprises cooling means (90) associated with said first half mould (60) and/or with said second half mould (70).

9. System (50) according to claim 8, **characterized in that** said cooling means (90) are associated with said first half mould (60) at the level of the area where said first insert (20) is positioned and/or said cooling means (90) are associated with said second half mould (70) at the level of the area where said second insert (22) is positioned.

## Patentansprüche

1. Verfahren zur Herstellung eines Gegenstandes (1) aus einem polymeren Werkstoff, wobei der besagte Gegenstand (1) mit einem Hauptkörper (10), einer ersten sichtbaren Oberfläche (12) und einer zweiten sichtbaren Oberfläche (14) gegenüber der besagten ersten sichtbaren Oberfläche (12) versehen ist, wobei das Verfahren die folgenden Schritte umfasst:
- Vorbereiten einer ersten Halbform (60), die entsprechend dem Profil der besagten ersten sichtbaren Oberfläche (12) des besagten Gegenstandes (1) gestaltet ist, und einer zweiten Halbform (70), die der besagten ersten Halbform (60) gegenüberliegt und entsprechend dem Profil der besagten zweiten sichtbaren Oberfläche (14) des besagten Gegenstandes (1) gestaltet ist;
- Positionieren eines ersten Einsatzes (20) aus einem polymeren Werkstoff in Kontakt mit der besagten ersten Halbform (60) und Halten des besagten ersten Einsatzes (20) in Kontakt mit der besagten ersten Halbform (60) durch elektrostatisches Aufladen des besagten ersten Einsatzes (20);
- Positionieren eines zweiten Einsatzes (22) aus einem polymeren Werkstoff in Kontakt mit der besagten zweiten Halbform (70) und Halten des besagten zweiten Einsatzes (22) in Kontakt mit der besagten zweiten Halbform (70) durch elektrostatisches Aufladen des besagten zweiten Einsatzes (22);
- Schließen der besagten Halbformen (60, 70) dergestalt, dass ein Hohlraum entsteht;
- Einspritzen eines polymeren Werkstoffs bei einer vorbestimmten Temperatur in den besagten Hohlraum, wobei der besagte polymere Werkstoff geeignet ist, den besagten Hohlraum so zu füllen, dass es den besagten Hauptkörper (10) des besagten Gegenstands (1) definiert, und geeignet ist, in Kontakt mit dem besagten ersten Einsatz (20) und dem besagten zweiten Einsatz (22) gebracht zu werden;
- Abkühlung des besagten polymeren Werkstoffs;
- Öffnen der besagten Halbformen (60, 70) und Extraktion des besagten Gegenstands (1),
**dadurch gekennzeichnet, dass**
Kopfbereiche (20a, 22a) des ersten Einsatzes (20) und/oder des zweiten Einsatzes (22) abgeschrägt sind und nicht senkrecht zur Vorschubrichtung des Werkstoffs stehen,
**und dadurch, dass** während des besagten Schritts des Einspritzens des besagten polymeren Werkstoffs der polymere Werkstoff, aus dem der besagte Hauptkörper (10) besteht, den besagten ersten Einsatz (20) gegen die erste Halbform (60) drückt und/oder der polymere Werkstoff den besagten zweiten Einsatz (22) gegen die zweite Halbform (70) drückt.

2. Verfahren nach Patentanspruch 1, **dadurch gekennzeichnet, dass** der besagte Schritt des Positionierens des zweiten Einsatzes (22) nach dem besagten Schritt des Positionierens des ersten Einsatzes (20) durchgeführt wird.

3. Verfahren nach jeglichem der vorhergehenden Patentansprüche, **dadurch gekennzeichnet, dass** der besagte Schritt des Einspritzens eines polymeren Werkstoffs durch Einspritzen des besagten polymeren Werkstoffs in die geschlossene Form von einem Zwischeneinspritzpunkt zwischen dem besagten ersten Einsatz (20) und dem besagten zweiten Einsatz (22) aus durchgeführt wird.

4. Verfahren nach jeglichem der vorhergehenden Patentansprüche, **dadurch gekennzeichnet, dass** es einen Schritt umfasst, bei dem der besagten ersten Halbform (60) auf der Höhe des Bereiches, in dem der besagte erste Einsatz (20) positioniert ist, Wärme entzogen wird, und/oder einen Schritt, bei dem der besagten zweiten Halbform (70) auf der Höhe des Bereiches, in dem der besagte zweite Einsatz (22) positioniert ist, Wärme entzogen wird.

5. Verfahren nach jeglichem der vorhergehenden Patentansprüche, **dadurch gekennzeichnet, dass** der besagte Schritt des Positionierens des besagten ersten Einsatzes (20) und des besagten zweiten Einsatzes (22) mittels automatischer mechanischer Mittel (80, 80a, 80b) durchgeführt wird und/oder der besagte Schritt des Herausziehens des besagten Gegenstandes (1) mittels automatischer mechanischer Mittel (80, 80a, 80b) durchgeführt wird.

6. Verfahren nach jeglichem der vorhergehenden Patentansprüche, **dadurch gekennzeichnet, dass** der besagte Schritt des Einspritzens eines polymeren Werkstoffs in den besagten Hohlraum das Einspritzen eines thermoplastischen Materials umfasst.

7. System (50) zur Herstellung eines Gegenstandes (1) aus einem polymeren Werkstoff, wobei der besagte Gegenstand (1) mit einem Hauptkörper (10), einer ersten sichtbaren Oberfläche (12) und einer zweiten sichtbaren Oberfläche (14) gegenüber der besagten ersten sichtbaren Oberfläche (12) versehen ist, **und wobei** dieses System (50) die folgenden Elemente umfasst:
- eine erste Halbform (60), die entsprechend dem Profil der besagten ersten sichtbaren Oberfläche (12) des besagten Gegenstandes (1) gestaltet ist, und einer zweiten Halbform (70), die der besagten ersten Halbform (60) gegenüberliegt und entsprechend dem Profil der besagten zweiten sichtbaren Oberfläche (14) des besagten Gegenstandes (1) gestaltet ist;
- einen ersten Einsatz (20) aus einem polymeren Werkstoff, der mit der besagten ersten Halbform (60) in Kontakt steht;
- Positionierungsmittel (80, 80a), die geeignet sind, den besagten ersten Einsatz (20) zu positionieren;
- Mittel, die geeignet sind, den besagten ersten Einsatz (20) elektrostatisch aufzuladen;
- einen zweiten Einsatz (22) aus einem polymeren Werkstoff, der mit der besagten zweiten Halbform (70) in Kontakt steht;
- Positionierungsmittel (80, 80a), die geeignet sind, den besagten zweiten Einsatz (22) zu positionieren;
- Mittel, die geeignet sind, den besagten zweiten Einsatz (22) elektrostatisch aufzuladen;
- Einspritzmittel (110), die zum Einspritzen eines polymeren Werkstoffs geeignet sind;
Kopfbereiche (20a, 22a) des ersten Einsatzes (20) und/oder des zweiten Einsatzes (22) abgeschrägt sind und nicht senkrecht zur Vorschubrichtung des Werkstoffs stehen.

8. System (50) nach Patentanspruch 7, **dadurch gekennzeichnet, dass** es Kühlmittel (90) umfasst, die mit der besagten ersten Halbform (60) und/oder mit der besagten zweiten Halbform (70) assoziiert sind.

9. System (50) nach Patentanspruch 8, **dadurch gekennzeichnet, dass** die besagten Kühlmittel (90) mit der besagten ersten Halbform (60) auf der Höhe des Bereichs assoziiert sind, in dem der besagte erste Einsatz (20) positioniert ist, und/oder die besagten Kühlmittel (90) mit der besagten zweiten Halbform (70) auf der Höhe des Bereichs assoziiert sind, in dem der besagte zweite Einsatz (22) positioniert ist.

## Revendications

1. Méthode pour la réalisation d'un objet (1) avec un matériau polymère, ledit objet (1) étant pourvu d'un corps principal (10), d'une première surface visible (12) et d'une deuxième surface visible (14) opposée à ladite première surface visible (12), la méthode comprenant les étapes suivantes :
- la préparation d'un premier demi-moule (60) configuré selon la forme de ladite première surface visible (12) dudit objet (1) et un deuxième demi moule (70) se trouvant en face dudit premier demi-moule (60) et configuré selon la forme de ladite deuxième surface visible (14) dudit objet (1) ;
- le positionnement d'une première insertion (20) fait d'un matériau polymère en contact avec ledit premier demi-moule (60) et le maintien de ladite première insertion (20) en contact avec ledit premier demi-moule (60) en chargeant ladite première insertion (20) de manière électrostatique ;
- le positionnement d'une deuxième insertion (22) réalisée en un matériau polymère en contact avec ledit deuxième demi-moule (70) et le maintien de ladite deuxième insertion (22) en contact avec ledit deuxième demi-moule (70) en chargeant ladite deuxième insertion (22) de manière électrostatique ;
- la fermeture desdits demi-moules (60, 70) de manière à définir une cavité ;
- l'injection d'un matériau polymère à une température prédéterminée dans ladite cavité, ledit matériau polymère étant adapté pour remplir ladite cavité de manière à définir ledit corps principal (10) dudit objet (1) et adapté pour être mis en contact avec ladite première insertion (20) et ladite deuxième insertion (22) ;
- le refroidissement dudit matériau polymère ;
- l'ouverture desdits demi-moules (60, 70) et l'extraction dudit objet (1),
**caractérisée en ce que**
les zones de tête (20a, 22a) de la première insertion (20) et/ou de la deuxième insertion (22) sont biseautées et ne sont pas perpendiculaires à la direction d'avance du matériau,
**et en ce que,** pendant ladite étape d'injection dudit matériau polymère, le matériau polymère qui constitue ledit corps principal (10) pousse ladite première insertion (20) contre le premier demi-moule (60) et/ou le matériau polymère pousse ladite deuxième insertion (22) contre le deuxième demi-moule (70).

2. Méthode selon la revendication 1, **caractérisée en ce que** ladite étape de positionnement de la deuxième insertion (22) est réalisée après ladite étape de positionnement de la première insertion (20).

3. Méthode selon l'une quelconque des revendications précédentes, **caractérisée en ce que** ladite étape d'injection d'un matériau polymère est réalisée en injectant ledit matériau polymère dans le moule fermé à partir d'un point d'injection intermédiaire entre ladite première insertion (20) et ladite deuxième insertion (22).

4. Méthode selon l'une quelconque des revendications précédentes, **caractérisée en ce qu'**elle comprend une étape au cours de laquelle la chaleur est extraite dudit premier demi-moule (60) à hauteur de la zone où ladite première insertion (20) est positionné et/ou une étape au cours de laquelle la chaleur est extraite dudit deuxième demi-moule (70) à hauteur de la zone où ladite deuxième insertion (22) est positionné.

5. Méthode selon l'une quelconque des revendications précédentes, **caractérisée en ce que** ladite étape de positionnement de ladite première insertion (20) et de ladite deuxième insertion (22) est réalisée à l'aide de moyens mécaniques automatiques (80, 80a, 80b) et/ou ladite étape d'extraction dudit objet (1) est réalisée à l'aide de moyens mécaniques automatiques (80, 80a, 80b).

6. Méthode selon l'une quelconque des revendications précédentes, **caractérisée en ce que** ladite étape d'injection d'un matériau polymère dans ladite cavité comprend l'injection d'un matériau thermoplastique.

7. Système (50) pour la réalisation d'un objet (1) avec un matériau polymère, ledit objet (1) étant pourvu d'un corps principal (10), d'une première surface visible (12) et d'une deuxième surface visible (14) opposée à ladite première surface visible (12), **où** ledit système (50) comprend :
- un premier demi-moule (60) configuré selon la forme de ladite première surface visible (12) dudit objet (1) et un deuxième demi-moule (70) se trouvant en face dudit premier demi-moule (60) et configuré selon la forme de ladite deuxième surface visible (14) dudit objet (1) ;
- une première insertion (20) réalisé en un matériau polymère en contact avec ledit premier demi-moule (60) ;
- des moyens de positionnement (80, 80a) adaptés pour positionner ladite première insertion (20) ;
- des moyens adaptés pour charger ladite première insertion (20) de manière électrostatique ;
- une deuxième insertion (22) réalisée en un matériau polymère en contact avec ledit deuxième demi-moule (70) ;
- des moyens de positionnement adaptés pour positionner ladite deuxième insertion (22) ;
- des moyens adaptés pour charger ladite deuxième insertion (22) de manière électrostatique ;
- des moyens d'injection (110) adaptés pour injecter un matériau polymère ;
les zones de tête (20a, 22a) de la première insertion (20) et/ou de la deuxième insertion (22) sont biseautées, elles ne sont pas perpendiculaires à la direction d'avance du matériau.

8. Système (50) selon la revendication 7, **caractérisé en ce qu'**il comprend des moyens de refroidissement (90) associés audit premier demi-moule (60) et/ou audit deuxième demi-moule (70).

9. Système (50) selon la revendication 8, **caractérisé en ce que** lesdits moyens de refroidissement (90) sont associés audit premier demi-moule (60) à hauteur de la zone où ladite première insertion (20) est positionnée et/ou lesdits moyens de refroidissement (90) sont associés audit deuxième demi-moule (70) à hauteur de la zone où ladite deuxième insertion (22) est positionnée.
